# EUROPEAN PATENT APPLICATION

(11) **EP 4 169 366 A1**
(43) Date of publication of application: **26.04.2023**
(21) Application number: 21752069.1
(22) Date of filing: 17.06.2021
(51) Int. Cl.: A01D 27/00

(54) **METHOD FOR HARVESTING AND HARVESTING MACHINE**

(30) Priority: 18.06.2020 ES 202030589
(71) Applicant: Mora Rodríguez, María Ángeles, 02005 Albacete (ES)
(72) Inventor: Mora Rodríguez, María Ángeles, 02005 Albacete (ES)
(74) Representative: Sugrañes, S.L.P.
(86) International application number: PCT/ES2021/070447
(87) International publication number: WO 2021/255316

(57) **Abstract**

The present invention relates to a harvesting machine (1) suitable for harvesting garlic plants (2) or similar that are made up of a head (2a), a stem (2b) and roots (2c), with a conveyor module (8) to which the uprooted plants are successively transferred for transport thereof in a longitudinal direction (X2) along a head conditioning station (A) which has, in the forward direction of the transported plants, at least one roughing substation (A1) with first means for levelling the heads (A1.N) at the top and for roughing the same; and a root cutting substation (A2) with means for levelling the previously roughed heads (A2.N) at the bottom and for cutting the roots flush with the heads that have been roughed and levelled at the bottom; and a stem cutting station (B) having second means for first levelling the heads (B.N) at the top and for cutting the stems later.

## Description

### Technical field of the invention

The present invention relates to a method for harvesting and a harvesting machine, especially suitable for harvesting garlic plants or similar that are made up of a bulb or head, a stem and roots.

### Background of the invention

Currently, garlic harvesting machines are known on the market that are coupled on a chassis towed by a towing vehicle, which can include one or more harvesting units arranged in parallel depending on the number of rows of furrows of the cultivated ground to be simultaneously harvested.

Harvesting machines of this type comprise uprooting means at the front portion thereof for extracting the garlic planted along the furrow of the ground, usually provided with a spike with a blade that is adjustable to the desired depth below the heads of the garlic plants inside the soil so that it uproots them as the harvesting machine advances, cutting off part of the roots and the adhered soil, and detaching them from the furrow.

A conventional lifting module is provided with a pair of endless lifting belts arranged in parallel, driven to rotate each one in the opposite direction so that two of the branches thereof oppose each other, defining a path of advancement in an upward direction according to a predefined angle of inclination with respect to the ground, which clamp therebetween each of the garlic plants previously extracted by the uprooting means, holding them by an arbitrary point of the stem thereof so that the heads are hanging from different holding heights. The garlic plants are thus led held along the upward path until reaching stem cutting means.

However, the aforementioned irregularity in the height of the holding points of the stems must be corrected before reaching the cutting means to prevent the stems from being cut at different distances from the base or sprouting area thereof since, as is known, the aesthetic appearance of the garlic heads is a key factor to comply with marketing standards.

Patent document CN 107820829 discloses a harvesting machine with two pairs of horizontal belts that operate in combination with the lifting belt, a lower pair and an upper pair, the belts of one same pair intended for clamping a portion of the plant therebetween for transportation.

In the proposal according to CN 107820829, the lower pair of belts is intended to grasp the roots of the garlic plants, which extend below the heads; and the upper pair of belts is intended to grasp the stems of the plants.

The machine further comprises fixed levelling rods that act as an upper level stop for the heads of the plants that extend between the lifting belts and up to an overlapping area, that is, above the lower pair of belts.

The rods ensure that all the heads are levelled at the top portion thereof, but it occurs that not all the heads have the same dimensions and in practice this is an obstacle to holding the plants by the roots thereof and performing other conditioning operations that are to be carried out on the heads before the stem cutting means, such as roughing or root cutting operations, are reached.

Furthermore, it should be noted that the greater the holding height of the stem when it is initially clamped by the lifting belts, the greater the path that the garlic plant must cover in order to get the upper portion of the head to reach the levelling rods. Therefore, to ensure that all the heads can be levelled before the roots are within reach of the lower pair of belts, an oversized length of the levelling rods would be needed, running the risk that those plants the heads of which have reached the levelling rods early and that have short stems end up falling from the lifting belts.

In the proposal according to CN 107820829, a compromise solution is chosen which consists of selecting a short length for the levelling rods and placing a sort of ramp at a level below the lower pair of belts to push the plants held by the stem upwards at a great distance from the head. Naturally, this solution does not prevent overcoming the problem that not all the heads have the same dimensions and that, therefore, it is not guaranteed that the lower pair of belts will grasp the roots.

In addition, it occurs that the roots are not all the same and that they also drag soil with them, which makes the correct hold thereof by the lower pair of belts impractical.

It also occurs that the levelling rods end with a horizontal section when the plants are still linked to the lifting belts. As these same plants will not all be properly held by the lower pair of belts given the reasons explained above, the heads are hampered by the levelling rods and in the best of cases this causes the plants to be twisted if they do not slip from the lifting belts and get lost.

With regard to conditioning operations, patent document FR2647628 describes a machine with a first pair of blades for cutting the stem arranged above a guide channel and a second pair of blades for cutting the roots arranged below the guide channel at a predefined distance to overcome the maximum foreseen height of the heads. The axes of both pairs of blades are coaxial so that the stem and roots are simultaneously cut as the garlic plants pass through both pairs of blades.

However, this type of harvesting machine has several drawbacks. On the one hand, it is not possible to cut the stems at a homogeneous distance from the bases thereof since a percentage of the heads cannot be correctly levelled due to the fact that the guide channel has a short travel length, as explained. On the other hand, it does not enable an efficient cutting of the roots to be carried out either since those garlic heads that have not been able to be levelled; when they reach the cutting blades of the roots, they do so at a height below the expected level, so that instead of cutting the roots, the unwanted cutting of the heads takes place, splitting them in two, thus rendering them unusable for marketing thereof.

Therefore, it would be desirable to have a solution especially suitable for harvesting machines for garlic plants or similar, which enables the stems of each of the garlic plants to be efficiently cut at a homogeneous distance from the upper portion of the head, that is, from the base or sprouting area of the stem; and which enables, in turn, the garlic heads to be supplied without roots and clean of soil remains and excess skins that may have been adhered thereto, therefore not being necessary to carry out subsequent manual conditioning operations before being marketed.

### Description of the invention

In order to provide a solution to the problems raised, a method is disclosed for harvesting garlic plants or similar that are made up of a bulb or head, a stem and roots, according to claim 1; and a machine for the implementation of the method according to claim 2.

Conventionally, the machine comprises uprooting means and a lifting module with a pair of lifting belts at an angle to the ground. However, the machine is characterised in that it comprises a conveyor module that will grasp the plants and transport them in a longitudinal direction, essentially horizontal, along a station for conditioning the heads of the plants and a station for cutting the stems, with various peculiarities.

For example, during the transport of the plants along the conveyor module the heads will be first levelled at the top and then at the bottom to carry out successive conditioning operations on said heads; and then the heads will be levelled again at the top for the cutting of the stem.

For this purpose, the head conditioning station has, in the forward direction of the transported plants, at least one roughing substation with first means for levelling the heads at the top and for roughing the same; and a root cutting substation with means for levelling the previously roughed heads at the bottom and for cutting the roots flush with the heads that have been roughed and levelled at the bottom; and the stem cutting station has, also in the forward direction of the transported plants, second means for levelling the heads at the top and for cutting the stems at a point close to said heads that are already roughed and devoid of roots.

In a variant, the conveyor module comprises
- a first pair of guide belts, to which the lifting module successively transfers the uprooted plants, the respective opposing branches of these guide belts being in mutual contact at least along a section of the trajectory thereof, thus making up a holding surface able to grasp and transport the grasped plants,
- a second pair of holding belts after the pair of guide belts, but a separation gap being defined therebetween, the respective opposing branches of these holding belts being in mutual contact, thus making up a holding surface able to grasp and transport the grasped plants; and
- an upper pair of belts arranged in a plane essentially parallel to the pairs of guide and holding belts and extending at least partially above the set formed by the pair of guide belts and the pair of holding belts and over the entire separation gap therebetween, the respective opposing branches of which are in mutual contact, thus making up a holding surface able to grasp therebetween each of the plants by an upper area of the stem thereof for the transport thereof, the plants being therefore held by two points of the stem thereof during their advancement along at least one portion of the guide belts and the holding belts, and held only by the upper pair of belts along the separation gap therebetween.

Preferably, in the pair of guide belts the following are distinguished
- a first levelling section that provides the function of the first means for levelling the heads at the top, wherein the opposing branches are separated by a predefined distance, thus making up a guide channel for the stems of the plants to be transferred to the conveyor module, the lower edge of the guide belts defining a movable levelling surface configured to act by way of a barrier on the upper portion of the heads in order to limit the advancement thereof in the upward direction, so that the heads as they come into contact with said levelling surface are left aligned by the upper area thereof, that is, at the level of the base of the stem, which in turn ensures the continuous downward sliding of the stems while the plants advance in the longitudinal direction of the guide channel; and
- a second holding section adjacent to the first levelling section, wherein the opposing branches of the guide belts are in mutual contact, thus making up a holding surface to grasp therebetween each of the plants from the guide channel, holding them by the area of the base of the stem, thus keeping the heads levelled, and the plants being thus led held along the path of the holding section in the longitudinal direction, in the path of which the head roughing substation of the conditioning station for conditioning said heads is arranged, provided with one or various cutting and/or cleaning devices configured to carry out conditioning operations such as removing protruding roots and adhered soil from the lower portion of the heads.

Consequently, the same pair of guide belts first ensures the levelling of the plants, levelling them at the top by the heads thereof, and then ensures the firm hold thereof in order to begin to carry out conditioning operations on said heads, specifically roughing operations described in greater detail later.

Moreover, as regards the root cutting substation in a variant of the machine, this is arranged below the separation gap between the pair of guide belts and the pair of holding belts and at least partially also below the trajectory of the pair of holding belts.

This separation gap between the pair of guide belts and the pair of holding belts, in combination with the presence of the upper pair of belts, will enable the plants to now be levelled at the bottom by the heads thereof, to be able to carry out the cutting thereof flush with the heads at the root cutting substation, once they have been cleaned of soil or elements that protrude excessively in the previous roughing substation.

In an embodiment of the invention, this second root cutting substation comprises, coinciding with the separation gap between the first and the second pairs of guide and holding belts, the means for levelling the heads at the bottom with at least
an upper set of floating rollers, which by resting on the heads of the plants pushes down the plants held only by the upper pair of belts,
a lower set of levelling brushes, on which the heads of the plants pushed by the floating rollers rest and levels them at the bottom,
   and below the pair of holding belts, root cutting devices.

Preferably, the floating rollers are two in number and are arranged to exert a thrust on the heads, each on one side of the stem, in addition to being driven in rotation, in a direction that contributes to the advancement of the plants.

Preferably, the levelling brushes, two in number, axially parallel to the direction of transport of the plants and symmetrically arranged in relation to the stem of the transported plants, in such a way that they are each on one side of the vertical projection of the stem, are in the form of helical brushes and are driven in rotation in such a way that they contribute to the advancement of the plants. These levelling brushes are preferably adjustable in height.

According to another preferred feature, the lower edge of said pair of holding belts is arranged at a level below the lower edge of the pair of guide belts, said edges of the pair of holding belts being capable of being deformed so that the larger heads can be partially submerged between the pair of holding belts, these holding belts thus absorbing the uneven size of the heads so that the lower end thereof is kept levelled at the outlet of the set of levelling brushes.

The invention contemplates that the head conditioning station comprises a polishing substation arranged after the root cutting substation with one or more polishing devices, for example adjustable in height, and arranged sequentially in a preset order according to the forward direction of the plants configured to progressively remove the layers of dead skin from the lower portion of the heads and possible soil remains.

In any case, the conveyor module will finally ensure the transport of the plants to the stem cutting station.

Preferably, the stem cutting station comprises, below the upper pair of belts and after the pair of transport belts, the second means for levelling the heads at the top, again, of the transported plants that have been grasped by said upper pair of belts and cutting tools for cutting the stems at a point close to the heads downstream or after the second means for levelling the heads at the bottom.

Other features or auxiliary equipment are foreseen, compatible with those hitherto introduced, as explained later.

### Brief description of the drawings

Figures 1 and 2 illustrate first schematically and then in a block diagram, the essence of the method according to the present invention;
Figure 3 schematically illustrates a machine according to the invention;
Figure 4 illustrates in an enlarged way the conveyor module along the roughing substation that includes an upper levelling phase of the heads;
Figure 5 schematically illustrates a detailed plan view of the pair of guide belts;
Figure 6 schematically illustrates a plant transported in the roughing substation;
Figure 7 schematically illustrates a detailed view of the lifting module according to a variant of the invention;
Figure 8 schematically illustrates a plant transported by the lifting module;
Figure 9 schematically illustrates the operations carried out on the heads in the roughing substation according to a variant of the invention;
Figure 10 schematically illustrates a detailed view of the conveyor module in the lower levelling phase of the heads of the root cutting substation;
Figure 11 schematically illustrates a plant transported during this lower levelling phase of the heads;
Figure 12a schematically illustrates the root cutting devices of the root cutting substation that follows the lower levelling phase of the heads;
Figures 12b and 12c show a schematic elevation and plan view, respectively, of a detail of the second root cutting device of this root cutting substation;
Figure 13 schematically illustrates the conveyor module along the head polishing substation;
Figure 14a schematically illustrates the conveyor module in coincidence with the stem cutting station; and
Figure 14b shows a schematic and plan view of a variant of this stem cutting station.

### Detailed description of the invention

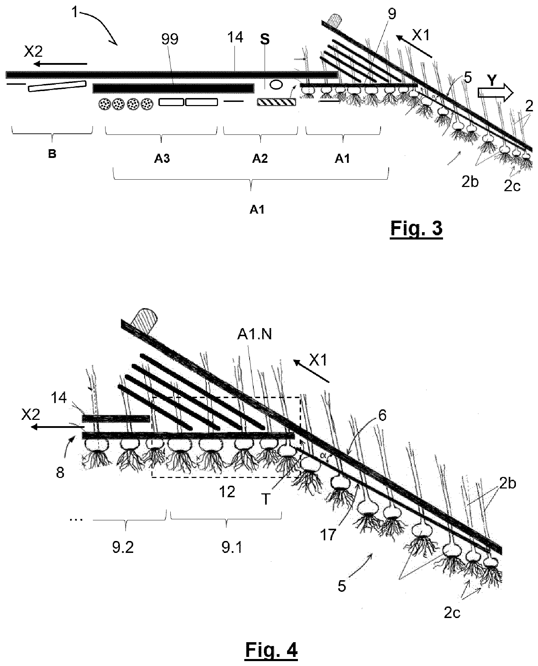

Figure 3 schematically shows a harvesting machine 1 that exemplifies the invention. The machine is suitable for harvesting garlic plants 2 or similar that are made up of a bulb or head 2a, a stem 2b and roots 2c. The harvesting machine can comprise one or more modules mounted in parallel on the chassis of a vehicle (not shown), depending on the rows of furrows of the ground to be simultaneously harvested. The harvesting machine is expected to be of the self-propelled type, although it could also be towed by a towing vehicle.

The machine comprises at the front portion thereof conventional uprooting means, not shown, configured for extracting the garlic plants 2 cultivated along the furrow of a ground as the vehicle advances, according to the Y direction. Using any type of uprooting means suitable for this purpose is envisaged, the use of a spike with an adjustable blade to the desired depth below the heads 2a of the garlic plants 2 inside the soil being common so that it uproots them as the machine advances, cutting off part of the roots 2c and the adhered soil, and detaching them from the furrow of the ground.

The machine 1 comprises, in a manner known *per se,* a lifting module 5 adjacent to the uprooting means that is provided with a pair of endless lifting belts arranged in parallel, driven to rotate each one in the opposite direction, so that two of the branches thereof oppose each other to grasp the plants by the stems thereof and ensure the transport thereof in the upward direction X1. The lifting module 5 is also illustrated in Figure 4.

It should be noted that the plants 2 are held by an arbitrary point on the stem 2b thereof, so that the heads 2a are hanging from different holding heights. The plants 2 are thus led, held in an essentially vertical position, along the upward path until they reach a transfer area T, in which the conveyor module 8 is adjacent, as will be explained later.

In this patent document, "belt" is understood as any transmission element such as a belt, band, strap or similar, joined at the ends thereof in a closed loop and driven by pulleys mounted at the ends thereof, which serves to transmit the rotary movement to other elements.

Likewise, it is envisaged that the belts are prepared or are suitable for grasping the stems without damaging the heads, for which the belts are made of a sufficiently flexible material or are padded or covered with soft materials.

After the lifting module 5, the machine 1 is equipped with the aforementioned conveyor module 8 that will take care of transporting the plants along an essentially horizontal direction X2, and along a head conditioning station A that, in turn, in the example, has a successive roughing substation A1; cutting root substation A2; and polishing substation A3. The conveyor module 8 ensures the transport of the plants beyond said conditioning station A and along a stem cutting station B.

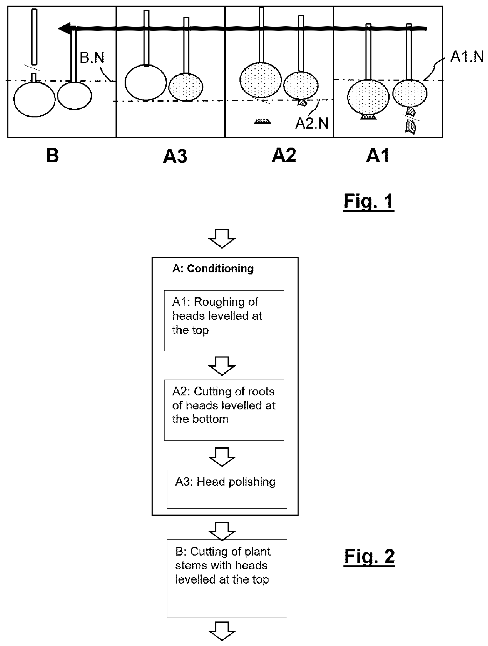

Figures 1 and 2 show the essential operations of these stations and substations. It should be noted that the roughing substation A1 has first means for levelling the heads A1.N at the top and for roughing thereof; that the root cutting substation A2 has means for levelling the previously roughed heads A2.N at the bottom and for cutting the roots flush with the heads that have been roughed and levelled at the bottom; and that the stem cutting station B has second means for levelling the heads B.N at the top, again, and for cutting the stems at a point close to said heads that are already roughed and devoid of roots.

For this purpose, the conveyor module 8 comprises belts and other elements actuated in coordination to ensure or contribute in the advancement of the plants.

Specifically, in Figure 3, a first pair of guide belts 9 is distinguished, to which the lifting module successively transfers the uprooted plants, the respective opposing branches of these guide belts being in mutual contact along at least one section thereof, thus making up a holding surface able to grasp and transport the plants grasped by a portion of the stems thereof; a second pair of holding belts 99 after the pair of guide belts 9, but a separation gap S being defined therebetween, the respective opposing branches of these holding belts being in mutual contact, thus making up a holding surface able to grasp and transport the plants grasped by the dome of the heads and the beginning of the stem; and an upper pair of belts 14 arranged in a plane essentially parallel to the pairs of guide belts 9 and holding belts 99 and extending at least partially above the set formed by the pair of guide belts 9 and the pair of holding belts 99 and over the entire separation gap S therebetween, the respective opposing branches of which are in mutual contact, thus making up a holding surface able to grasp therebetween each of the garlic plants by an upper area of the stem thereof for the transport thereof. However, the plants are held by two points of the stem thereof during their advancement along at least one portion of the pair of guide belts 9 and of the pair of holding belts 99, and are only held by the upper pair of belts 14 along the separation gap S therebetween.

It is envisaged that the upper 14 pairs of guide belts 9 and holding belts 99 are respectively provided with means for the adjustment thereof in height (not shown) to facilitate the correct positioning thereof.

Likewise, the advancement rate of all pairs of belts of the conveyor module 8 must be the same, preferably also adjustable.

Aspects of the machine 1 in the area of influence of the roughing substation A1 are explained below, with the help of Figures 4 to 6 and 9.

Figure 4 aims to show that the irregularity in the height of the holding points of the stems 2b by the lifting module 5 is corrected at the beginning of the roughing substation A1 thanks to the particular configuration of the pair of guide belts 9.

Said pair of guide belts 9 can be driven by means of two pulleys 10 mounted at the opposite ends thereof, further using a set of intermediate tensioner pulleys 10a to keep the pressure required to grasp the plants.

The guide belts 9 comprise a first levelling section 9.1 of length d arranged adjacent to the transfer area T of the plants from the lifting module 5, in which the opposing branches are separated by a predefined distance, thus making up a guide channel 11 able to receive and guide therethrough the stem 2b of each of the garlic plants 2 as they reach the transfer area T, at the same time that they are held and led by the lifting belts 6 of the lifting module 5. The lower edge of the guide belts 9 acts by way of a mobile barrier on the upper portion of the heads 2a in order to limit the advancement thereof in the upward direction X1, so that the heads 2a as they come into contact with the guide belts 9 are aligned at the upper area thereof, that is, at the level of the base of the stem 2b, which causes the stems to slip from between the lifting belts 6. However, the first levelling section 9.1 of the pair of guide belts 9 exercises the function of first upper levelling means of the heads A1.N.

Furthermore, the guide belts 9 further comprise a second holding section 9.2 adjacent to the first levelling section 9.1, in which the respective opposing branches thereof grasp therebetween each of the plants 2 coming from the guide channel 11, holding them by the area of the base of the stem 2b, thus keeping the heads 2a levelled, with the purpose of sequentially leading each of the plants thus held along the path of the holding section 9.2 in the longitudinal direction X2 that enables the heads 2a to be conditioned.

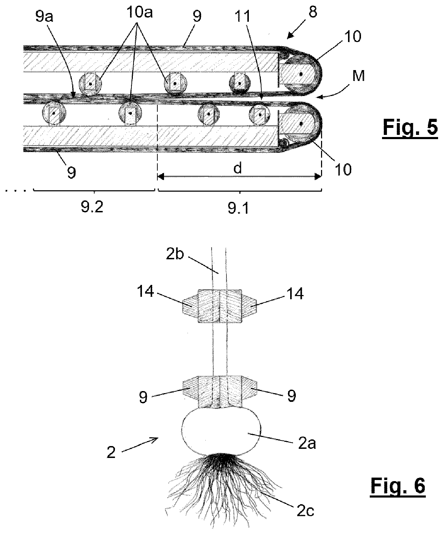

It should be noted that (see Figure 6) along the holding section 9.2 the pair of upper belts 14 also grasp therebetween each of the plants by an upper area of the stem 2b thereof, the garlic plants 2 therefore being held by two points of the stem 2b thereof during their advancement along the path of the holding section 9.2 of the guide belts 9 which is advantageous to prevent the plants from moving and deteriorating during the operations carried out in the roughing substation A1.

As pointed out before, the pair of guide belts 9 and the upper pair of belts 14 are driven to ensure one same transport rate for the grasped plants.

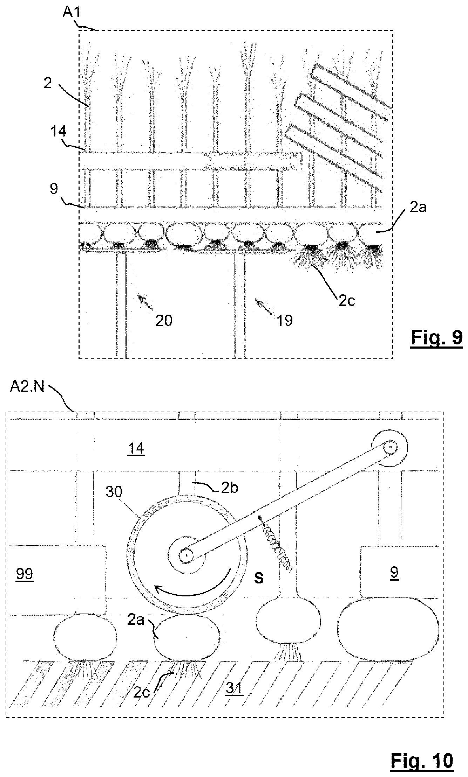

Along the holding section 9.2, when the plants 2 are already grasped by the pair of guide belts 9 and the upper pair of belts 14, the heads 2a are subjected to the roughing operations considered. In the example, see Figure 9, two cutting devices 19 and 20 adjustable in height remove a large part of the roots 2c and the adhered soil. These cutting devices 19, 20 are preferably adjustable in height and can be calibrated to a suitable level for removing the roots of the heads that are expected to be larger, so that the roots of the heads of a smaller size will be only partially removed, although sufficiently so that, at a later stage, the heads can be levelled at the bottom. In the example, the cutting devices 19, 20 have respective discoidal rotating cutting tools.

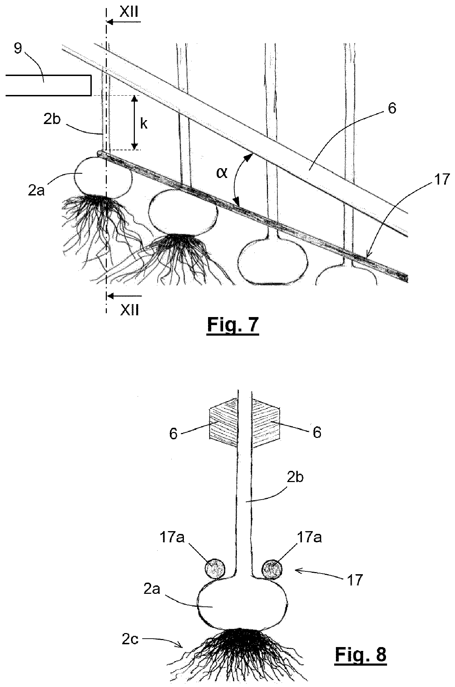

Figures 7 and 8 show that, in the exemplary machine, the lifting module 5 comprises a device 17 provided with a pair of levelling rods 17a fixed in an area below the lifting belts 6, in a position prior to the transfer area T, and both levelling rods 17a being respectively arranged on each side of the stems 2b, enabling the passage of the garlic plants 2 during the upward advancement thereof, and in turn inclined vertically with a predefined angle α offset with respect to the upward direction X1 of the lifting belts 6, so that both output ends of the levelling rods 17a are arranged at a threshold height "k" below the level of the transfer area T, able to act by way of a barrier on the upper portion of those heads 2a the stem 2b of which has been clamped by the lifting belts 6 at a holding height lower than said threshold height "k", so that said heads 2a are forced to descend to said threshold height "k" during the advancement thereof before reaching the transfer area T.

In this way, said threshold height "k" defines a minimum holding height of the stems 2b capable of covering the path d of the guide channel 11.

In the exemplary machine 1, the levelling rods 17a are further adapted to produce controlled vibrations on the stems 2b during the upward advancement of the garlic plants 2, suitable to favour the controlled sliding of the stems 2b during the action thereof on the heads 2a.

Aspects of the machine 1 in the area of influence of the root cutting substation A2 are explained below, with the help of Figures 10 to 13.

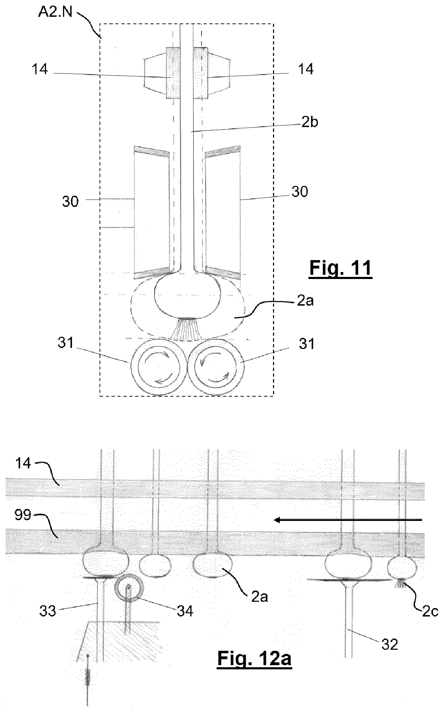

Figures 10 and 11 show the means for levelling the heads A2.N at the bottom. Specifically, in coincidence with the separation gap S between the first and the second pairs of guide belts 9 and holding belts 99, there is an upper set of floating rollers 30, which by resting on the heads 2a of the plants pushes down the plants held only by the upper pair of additional belts 14.

The floating rollers 30, two in number, are arranged to exert a thrust on the heads 2a, each on one side of the stem, and are preferably driven in rotation, in a direction that contributes to the advancement of the plants. Referring to Figure 10, the floating rollers would be driven in a clockwise direction.

Under the heads there is a lower set of levelling brushes 31, on which the heads 2a of the plants pushed down by the floating rollers 30 rest and that levels them at the bottom.

The levelling brushes 31, two in number, are axially parallel to the direction of transport of the plants and are symmetrically arranged in relation to the stem of the transported plants, in such a way that they are each on one side of the projection of the stem.

The levelling brushes 31 are preferably in the form of helical brushes and are driven in rotation in such a way that they contribute to the advancement of the plants. With one on each side of the vertical projection of the stems of the plants, the rotary drive of one of the levelling brushes is opposed with respect to the other. These levelling brushes 31 are adjustable in height.

Figure 10 also serves to indicate that the lower edge of said pair of holding belts 99 is arranged at a level below the lower edge of the pair of guide belts 9, said edges of the pair of holding belts being capable of being deformed so that the larger heads 2a can be partially submerged between the pair of holding belts 99, these holding belts 99 thus absorbing the uneven size of the heads so that the lower end thereof is kept levelled at the outlet of the set of levelling brushes 31 and that at the same time said heads 2a are held by the dome thereof and by the beginning of the stems thereof by the pair of holding belts 99.

The completion of the cutting of roots 2c is envisaged after the levelling brushes 31, see Figure 12a, taking advantage of the fact that the heads 2a are levelled at the bottom. In the example, at least one first and one second root cutting device 32, 33 are arranged in succession for this purpose.

The action order on the plants 2, the first root cutting device 32 comprises a set of two discoidal rotating cutting tools, which overlap and the intersection points (in plan) of which are aligned with the direction of transport of the plants to act jointly by way of scissors. This first cutting device 32 is adjustable in height.

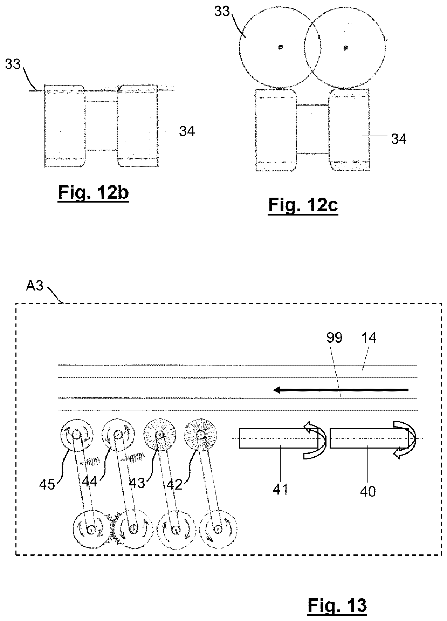

The second root cutting device 33 is schematically illustrated in elevation and plan view in Figures 12b and 12c, respectively. The second root cutting device 33 is mounted on a floating group and the instantaneous cutting level thereof is defined by a sensing element 34 arranged adjacently. Even when the heads 2a have been inferiorly at the bottom, in practice there are still small variations in level, of the order of 3 to 4 mm on average, and the sensing element 34 will arrange the second root cutting device 33 at the appropriate level for each head 2a. These variations in level can be successfully compensated because they are small in size, which is not possible if, before levelling the heads at the bottom, they are not subjected to any roughing operation. Indeed, when trying to ensure a levelling of the rough heads at the bottom, without first being subjected to a roughing operation, the differences in level may be of the order of 20 mm on average, approximately, which prevents a correct root cutting operation from being carried out with precision.

It should be noted that, in the example, the second root cutting device 33 is made up of two complementary discoidal rotating cutting tools, of smaller dimensions compared to the cutting tool of the first root cutting device 32; and that the sensing element 34 is configured to define a sort of housing or gap for the roots that may still remain in the lower portion of the heads, now not very bulky and very short, due to the successive cutting operations carried out until the plants reach this sensing element 34.

Aspects of the machine 1 in the area of influence of the polishing substation A3 are explained below, with the help of Figure 13.

In order to remove skins and provide the heads 2a with an optimal finish, it is proposed, taking advantage of the fact that the plants are transported held by two points of the stem thereof by means of the pair of holding belts 99 and the pair of upper belts 14, that the heads be polished using, in the example:
A first set of at least two rotating brushes 40, 41 arranged one after the next, axially aligned, parallel to the direction of transport X2 of the plants and with the rotation axes thereof preferably inscribed in the vertical plane on which the stems of the plants in transport are located. The brushes of this first set of brushes are driven in rotation according to opposite directions of rotation and are adjustable in height.
A second set of at least two rotating brushes (42, 43, 44 and 45: four in number in the example) also arranged one after the next but now with the rotation axes thereof normal to the direction of transport X2 of the plants. The brushes of this second set of brushes are floating and are driven in rotation according to opposite directions with respect to an adjacent brush, for which using a belt drive for each brush to a driven gear is envisaged, the driven gears being associated with each brush being interlocked with each other in series and one of them being a motorised gear.

Another combination or arrangement of brushes is possible. For example, equipping the polishing substation A3 with another set of rotating brushes, not floating but adjustable in height and with an axis of rotation normal to the direction of transport X2, arranged between the first and second sets of brushes mentioned above, is contemplated.

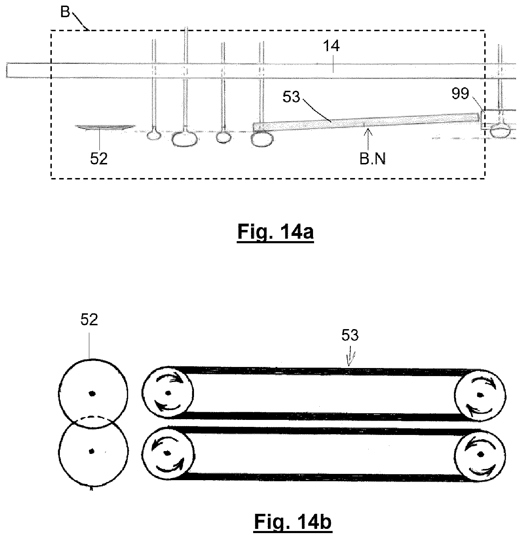

Aspects of the machine 1 in the area of influence of the stem cutting station B are explained below, with the help of Figure 14a.

After said conditioning station A for conditioning the heads 2a, according to the longitudinal direction X2 of advancement of the garlic plants 2, there is the cutting station B for cutting the stems 2b, specifically arranged in a position adjacent to the end of the stroke of the holding belts 99.

This stem cutting station B comprises, in the example, below the upper pair of belts 14 and after the pair of transport belts 99, the second means for levelling the heads B.N at the top of the transported plants now only grasped by said upper pair of belts 14 and stem cutting devices 52, arranged downstream or after the second means for levelling the heads B. N at the top.

By way of example only, Figure 14b schematically shows on the one hand that the second means for levelling the B.N heads at the top can be formed by a pair of levelling belts 53, actuated in coordination and at the same advancement rate as the upper pair of belts 14, the lower edge of which acts as an upper stop barrier of the heads of the transported plants. This enables the heads to be evened at the top so that the stem cutting device 52, which is illustrated in the form of two discoidal rotating cutting tools, can cut the stem at one same distance from the head for all plants. In order for this distance to be selected according to market needs, the stem cutting device 52 must be adjustable in height.

## Claims

1. A method for harvesting garlic plants (2) or similar that are made up of a bulb or head (2a), a stem (2b) and roots (2c), with a harvesting unit mountable on the chassis of an agricultural vehicle and comprising uprooting the plants and transporting them with a lifting module that uses a pair of lifting belts at an angle to the ground that grasps the uprooted plants by the stems thereof and transports them until they reach a conveyor module to which the plants are successively transferred; and the transport of the plants held by the stems thereof by said conveyor module in a longitudinal direction, essentially horizontal along a conditioning station for conditioning the heads of the plants and a stem cutting station, the method being **characterised in that** in the forward direction of the transported plants
- at the head conditioning station, in this order the plants are at least levelled at the top by the heads thereof and the heads are subjected to roughing operations; and the plants are levelled at the bottom by the roughed heads thereof and the roots are cut flush with the heads; and **in that**
- at the stem cutting station, in this order the plants are levelled again at the top by the heads thereof and the stems are cut at a point close to said heads that are already roughed and devoid of roots.

2. A harvesting (1) machine, especially suitable for harvesting garlic plants (2) or similar that are made up of a bulb or head (2a), a stem (2b) and roots (2c), equipped with at least one harvesting unit mountable on the chassis of a vehicle and comprising plant uprooting means and a lifting module (5) with a pair of lifting belts at an angle to the ground that grasps the uprooted plants and transports them until reaching a conveyor module (8) to which the plants are successively transferred, the conveyor module (8) being configured to transport the plants held by the stems in a longitudinal direction (X2), essentially horizontal along a conditioning station (A) for conditioning the heads of the plants and a stem cutting station (B), and the machine being **characterised in that**
- the head conditioning station (A) has, in the forward direction of the transported plants, at least one roughing substation (A1) with first means for levelling the heads (A1 .N) at the top and for roughing the same; and a root cutting substation (A2) with means for levelling the previously roughed heads (A2.N) at the bottom and for cutting the roots flush with the heads that have been roughed and levelled at the bottom; and **in that**
- the stem cutting station (B) has second means for levelling the heads (B.N) at the top, again, and for cutting the stems at a point close to said heads that are already roughed and devoid of roots.

3. The harvesting machine (1) according to claim 2, **characterised in that** the conveyor module (8) comprises
- a first pair of guide belts (9), to which the lifting module (5) successively transfers the uprooted plants, the respective opposing branches of these guide belts being in mutual contact at least along a section of the trajectory thereof, thus making up a holding surface able to grasp and guide the grasped plants,
- a second pair of holding belts (99) after the pair of guide belts (9), but a separation gap (S) being defined therebetween, the respective opposing branches of these holding belts being in mutual contact, thus making up a holding surface able to grasp and transport the grasped plants; and
- an upper pair of belts (14) arranged in a plane essentially parallel to the pairs of guide belts (9) and holding belts (99) and extending at least partially above the set formed by the pair of guide belts (9) and the pair of holding belts (99) and over the entire separation gap (S) therebetween, the respective opposing branches of which are in mutual contact, thus making up a holding surface (14a) able to grasp therebetween each of the plants (2) by an upper area of the stem (2b) thereof for transport thereof, the plants (2) being therefore held by two points of the stem (2b) thereof during their advancement along at least one portion of the guide belts (9) and the holding belts (99), and held only by the upper pair of belts (14) along the separation gap (S) therebetween.

4. The harvesting machine (1) according to claims 2 or 3, wherein the lifting module (5) comprises a pair of endless lifting belts (6) arranged in parallel so that two of the branches thereof are opposing each other, defining a path of advancement in an upward direction (X1) according to a predefined angle of inclination with respect to the ground (3), and both opposing branches being arranged in mutual contact to grasp therebetween each of the plants (2) previously extracted by the uprooting means, holding them by an arbitrary point of the stem (2b) thereof, so that the heads (2a) are hanging from different holding heights (h), and the plants (2) being thus led held along the upward path until they reach a transfer area (T) of the plants to the pair of guide belts (9) of the conveyor module (8), **characterised in that** in said guide belts (9) are distinguished
- a first levelling section (9.1) arranged adjacent to said transfer area (T), which provides the function of the first means for levelling the heads (A1.N) at the top, wherein the opposing branches are separated by a predefined distance, thus making up a guide channel (11) able to receive and guide therethrough the stem (2b) of each of the plants (2) as they reach the transfer area (T), at the same time that they are held and led by the lifting belts (6); the lower edge of the guide belts (9) defining a movable levelling surface (12) configured to act by way of a barrier on the upper portion of the heads (2a) in order to limit the advancement thereof in the upward direction (X1), so that the heads (2a) as they come into contact with said levelling surface (12) are left aligned by the upper area thereof, that is, at the level of the base of the stem (2b), which in turn ensures the continuous downward sliding of the stems (2b) while the plants (2) advance in the longitudinal direction (X2) of the guide channel (11); and
- a second holding section (9.2) adjacent to the first levelling section (9.1), in which the opposing branches of the guide belts (9) are in mutual contact to grasp therebetween each of the plants (2) coming from the guide channel (11), holding them by the area of the base of the stem (2b), thus keeping the heads (2a) levelled, and the plants (2) being thus led held along the path of the holding section (9.2) in the longitudinal direction (X2), in the path of which the roughing substation (A1) for roughing the heads (2a) of the conditioning station (A) for conditioning said heads (2a) is arranged, provided with at least one or various cutting devices configured to carry out conditioning operations such as removing protruding roots and adhered soil from the lower portion of the heads (2a).

5. The harvesting machine (1) according to any one of claims 2 to 4, **characterised in that** the root cutting substation (A2) is arranged below the separation gap (S) between the pair of guide belts (9) and the pair of holding belts (99) and at least partially also below the trajectory of the pair of holding belts (99).

6. The harvesting machine (1) according to the preceding claim, **characterised in that** the root cutting substation (A2) comprises
- in coincidence with the separation gap (S) between the first and the second pairs of guide belts (9) and holding belts (99), the means for levelling the heads (A2.N) at the bottom, with at least
an upper set of floating rollers (30), which by resting on the heads (2a) of the plants pushes down the plants held only by the upper pair of belts (14), a lower set of levelling brushes (31), on which the heads (2a) of the plants pushed by the floating rollers (30) rest and levels them at the bottom,
- and below the pair of holding belts,
root cutting devices (32, 33).

7. The harvesting machine (1) according to the preceding claim, **characterised in that** the floating rollers (30), two in number, arranged to exert a thrust on the heads (2a), each on one side of the stem, are driven in rotation, in a direction that contributes to the advancement of the plants.

8. The harvesting machine (1) according to claims 6 or 7, **characterised in that** the levelling brushes (31), two in number, axially parallel to the direction of transport of the plants and symmetrically arranged in relation to the stem of the transported plants, in such a way that they are each on one side of the vertical projection of the stem, are in the form of helical brushes and are driven in rotation in such a way that they contribute to the advancement of the plants.

9. The harvesting machine (1) according to any one of claims 6 to 8, **characterised in that** the lower edge of said pair of holding belts (99) is arranged at a level below the lower edge of the pair of guide belts (9), said edges of the pair of holding belts being capable of being deformed so that the larger heads (2a) can be partially submerged between the pair of holding belts, these holding belts thus absorbing the uneven size of the heads so that the lower end thereof is kept levelled at the outlet of the set of levelling brushes (31).

10. The harvesting machine (1) according to any one of claims 2 to 9, **characterised in that** the conditioning station (A) for conditioning the heads (2a) comprises a polishing substation (A3), arranged after the root cutting substation (A2), with one or more polishing devices (40 to 45) arranged sequentially in a preset order according to the forward direction (X2) of the plants (2), configured to progressively remove the layers of dead skin from the lower portion of the heads (2a) and possible soil remains.

11. The harvesting machine (1) according to claim 10, **characterised in that** the polishing devices comprise at least
a first set of at least two rotating brushes (40, 41) arranged one after the next, axially aligned, parallel to the direction of transport X2 of the plants and with the rotation axes thereof preferably inscribed in the vertical plane on which the stems of the plants in transport are located and that are driven in rotation according to opposite directions of rotation; and
a second set of at least two rotating brushes (42 to 45) also arranged one after the next but now with the rotation axes thereof normal to the direction of transport X2 of the plants and which are driven in rotation according to opposite directions.

12. The harvesting machine (1) according to any one of claims 3 to 11, **characterised in that** the stem cutting station (B) comprises, below the upper pair of belts (14) and after the pair of transport belts (99), the second means for levelling the heads (BN) at the top of the transported plants that have been grasped by said upper pair of belts (14) and stem cutting tools (52) at a point close to the heads downstream or after the second means for levelling the heads at the top.

13. The harvesting machine (1) according to any one of claims 2 to 12, **characterised in that** the lifting module (5) comprises a device (17) provided with a pair of levelling rods (17a), or similar elements, fixed in an area below the lifting belts (6), in a position prior to the transfer area (T), and both levelling rods (17a) being respectively arranged on each side of the stems (2b), enabling the passage of the plants (2) during the upward advancement thereof, and in turn inclined vertically with a predefined angle (α) offset with respect to the upward direction (X1) of the lifting belts (6), so that both outlet ends of the levelling rods (17a) are arranged at a threshold height (k) below the level of the transfer area (T), able to act by way of a barrier on the upper portion of those heads (2a) the stem (2b) of which has been clamped by the lifting belts (6) at a holding height (h) lower than said threshold height (k), so that said heads (2a) are forced to descend to said threshold height (k) during the advancement thereof before reaching the transfer area (T); so that said threshold height (k) defines a minimum holding height (h) of the stems (2b) capable of covering the upward path necessary to overcome a dead space (M), created between the radial perimeter of two pulleys (10) for driving the guide belts (9) located at the end thereof adjacent to the transfer area (T), with the aim that no head (2a) slips through said dead space (M), thus guaranteeing that all the heads (2a) are transferred towards the guide channel (11).

14. The harvesting machine (1) according to the preceding claim, **characterised in that** the levelling rods (17a) are adapted to produce controlled vibrations on the stems (2b) during the upward advancement of the plants (2), suitable to favour the controlled sliding of the stems (2b) during the action thereof on the heads (2a).
